# FASCICULE DE BREVET EUROPEEN

(11) **EP 0 502 774 B1**
(45) Date de publication et mention de la délivrance du brevet: **02.11.1995**
(21) Numéro de dépôt: 92400534.1
(22) Date de dépôt: 02.03.1992
(51) Int. Cl.: B60N 2/10, B60N 2/22

(54) **Mécanisme de réglage du dossier d'un siège**
Vorrichtung zum Verstellen einer Sitzrückenlehne
Seat back adjusting mechanism

(30) Priorité: 05.03.1991 FR 9102590
(43) Date de publication de la demande: 09.09.1992
(73) Titulaire: BERTRAND FAURE AUTOMOBILE "B.F.A.", F-91300 Massy (FR)
(72) Inventeur: Baloche, François, F-61100 Flers (FR)
(74) Mandataire: Madeuf, René Louis

(56) Documents cités:
- EP-A- 0 250 290
- FR-A- 2 139 271
- FR-A- 2 215 108
- FR-A- 2 231 538
- FR-A- 2 578 602
- PATENT ABSTRACTS OF JAPAN vol. 014, no. 543 30 Novembre 1990 & JP-A-22 028 914 (TACHI) 11 Septembre 1990

## Description

Sous l'influence de la clientèle, les constructeurs présentent de plus en plus de modèles de véhicule de chaque type, sous la forme de véhicules dits trois portes, à savoir deux portes latérales et un hayon arrière, car cela permet de mettre en circulation des véhicules de plus petite longueur, plus aisément utilisables en ville, tout en permettant cependant le transport aisé de quatre personnes au moins puisque la partie arrière du véhicule est munie d'une banquette unique ou autre.

Cependant, ce type de véhicule nécessite obligatoirement des portes latérales de grande longueur, facilitant le passage des passagers arrière aussi bien à l'entrée qu'à la sortie du véhicule.

Mais, de plus, il est nécessaire de prévoir des sièges avant (conducteur et passager avant) dont les dossiers sont rabattables sur les assises pour permettre également le passage aisé des passagers assis à l'arrière du véhicule, aussi bien pour entrer que pour sortir de ce dernier.

On sait que, depuis fort longtemps, les dossiers de siège avant des véhicules sont réglables en inclinaison pour assurer un confort maximum au conducteur et au passager.

On connaît donc des mécanismes d'articulation permettant le réglage d'inclinaison du dossier ; ces mécanismes peuvent également être conçus de façon à permettre le rabattement des dossiers sur les assises avec en plus un organe (mémoire) qui assure la remise en position correcte du dossier après l'entrée ou la sortie du ou des passagers arrière du véhicule mais tous ces dispositifs de réglage sont compliqués, et donc d'un prix de revient élevé.

C'est en particulier le cas pour le EP-A-0 250 290 (Cousin) et le FR-A-2 231 538 (Keiper). Ce dernier document antérieur décrit un moyen de positionnement par des grains dentés bloqués en denture d'une couronne au moyen d'une came rappelée lors du verrouillage par des rainures courbes les actionnant par des ergots solidaires de ces grains. Mais rien dans cette solution ne retient les grains sur un certain débattement angulaire pour les maintenir hors de la denture de la couronne.

Les constructeurs ont donc demandé des mécanismes très surs, simples, peu coûteux, pouvant être montés sur différents types de siège et ayant comme fonction de base requise, d'une part, le réglage d'inclinaison du dossier par rapport à l'assise et, d'autre part, la possibilité d'effectuer le rabattement rapide du dossier sur l'assise du siège avec un organe mémoire permettant la remise en place correcte du dossier après l'entrée ou la sortie du ou des passagers arrière du véhicule.

Finalement, ces mécanismes doivent être étudiés pour être adaptables sur plusieurs types de véhicule et ne nécessiter qu'une manoeuvre simple, tant pour le réglage de l'inclinaison du dossier que pour le rabattement de ce dernier sur l'assise.

Pour finir, ces mécanismes doivent être sans jeu notable afin d'éviter une sensation désagréable du passager assis sur le siège considéré.

Le mécanisme de la présente invention répond entièrement à ces conditions en proposant des moyens simples, bon marché, très sûrs, même en cas d'accident, et sans jeu notable.

Conformément à l'invention, le mécanisme de réglage du dossier d'un siège, comprenant un flasque circulaire fixe fixé sur l'armature de l'assise du dossier, ce flasque fixe étant évidé intérieurement sous la forme d'une coupelle et contenant des alvéoles, d'une part, et, d'autre part, un évidement circulaire de grand diamètre pour recevoir le bord périphérique d'un flasque mobile circulaire présentant également extérieurement des organes de fixation pour le relier à l'armature du dossier du siège considéré, puis des alvéoles du flasque fixe contiennent intérieurement des grains disposés à120° les uns des autres, comportant chacun une denture extérieure, ces grains reposant sur des pousse-grains munis chacun d'un doigt tourné vers le flasque mobile, de plus ces pousse-grains reposent sur une came montée sur un arbre central entraînant en rotation la came qui présente dans le prolongement de ses trois redans d'une part, des sections en creux et, d'autre part, des queues coopérant avec des ressorts en cor de chasse dont l'une des extrémités est maintenue dans une cavité prévue à l'intérieur du flasque fixe, caractérisé en ce que les doigts des pousse-grains coopèrent avec un anneau maintenu à l'intérieur du flasque mobile et présentant trois sur-épaisseurs assurant le maintien en position repoussée vers le centre du mécanisme de réglage du dossier d'un siège lorsque la came a été pivotée dans le sens de son effacement contre l'action des ressorts.

Diverses autres caractéristiques de l'invention ressortent d'ailleurs de la description détaillée qui suit.

Une forme de réalisation de l'objet de l'invention est représenté, à titre d'exemple non limitatif, au dessin annexé.

La fig. 1 est une élévation de face, en partie arrachée, du mécanisme de réglage du dossier d'un siège.

La fig. 2 est une coupe diamétrale de la fig. 1 suivant la ligne II-II de cette fig. 1.

Le mécanisme de réglage de l'inclinaison d'un dossier de siège est constitué essentiellement par un flasque fixe 1 qui est fixé par des organes de liaison, non représentés, sur l'armature de l'assise.

Le flasque 1 est évidé intérieurement d'abord par une coupelle 2 dans laquelle viennent se placer trois grains dentés 3, disposés à 120° les uns des autres.

Ces grains sont repoussés en permanence vers le centre du flasque 1 par des lames ressort 4 de faible largeur, de façon que la partie supérieure 3a dentée des grains 3 soit en partie dégagée.

Les grains reposent normalement contre des pièces pousse-grains 5 présentant chacun un doigt 5a.

Les grains 3 et les pièces pousse-grains 5 sont maintenus à l'intérieur du flasque fixe 1, dans les alvéoles 50 prévues à cet effet.

Les pièces pousse-grains 5, qui sont disposées à 120° les unes des autres comme les grains 3, présentent à leur partie inférieure une forme amincie 5b dont la face, sensiblement horizontale 5c, est en contact avec un redan 6 d'une came 7, présentant trois redans 6, également disposés à 120° ; ces redans étant prolongés par une section en creux 8 de façon que ces sections en creux 8 soient également disposées à 120° les unes des autres, de plus les redans 6 sont prolongés ensuite par des queues 9, également disposées à 120° les unes des autres et formant les points extérieurs les plus extrêmes de la came 7.

Chaque queue 9 est soumise à l'action d'un ressort de rappel 10 en cor de chasse, dont l'extrémité terminale 10a extérieure est logée dans une cavité 11 prévue dans la face interne du flasque fixe 1 du mécanisme d'articulation.

Il est à signaler que les faces supérieures 51 des pièces pousse-grains 5 sont légèrement convexes, tandis que les faces inférieures 3b des grains dentés 3 sont concaves.

La came 7 est centrée sur un manchon 13 d'un arbre 14, passant à travers une ouverture centrale 15 percée au centre du flasque fixe 1.

L'arbre 14 traverse un dégagement circulaire 16 percé au centre du flasque mobile 12.

Le flasque 12 comporte intérieurement un dégagement 17 dans lequel est logé un anneau de déverrouillage 18 qui est maintenu à l'intérieur du dégagement 17 par des bossages 20 solidaires du flasque mobile 12, ces bossages disposés à 120° les uns des autres pénétrant dans des découpes 18a de l'anneau 18 de façon à maintenir ce dernier solidaire du flasque mobile 12.

La face interne de l'anneau 18 présente trois surépaisseurs 18b à bords extérieurs arrondis, destinés à coopérer avec les doigts 5a des organes pousse-grains 5 portant les grains 3.

Finalement, une rondelle 22 est centrée par rapport au dégagement circulaire 16, cette rondelle 22 maintenant en place les pousse-grains 5 et la came 7 lors du déverrouillage et du basculement du dossier vers l'avant, en évitant ainsi le maintien continu de la commande de déverrouillage tout au long du débattement angulaire du dossier.

Comme cela est connu, le maintien du flasque mobile 12 sur le flasque fixe 1 se fait à l'aide d'un anneau creux serti 24 qui maintient le bord périphérique extérieur du flasque mobile 12 dans un évidement circulaire de grand diamètre 26 prévu à l'intérieur du flasque fixe 1.

Dans le cas présent, le flasque mobile 12 glisse à l'intérieur du flasque fixe 1 du fait des faces rectifiées de l'évidement circulaire 26 et de la périphérie extérieure du flasque 12, mais il est possible également d'interposer, d'une manière connue en soi, un roulement à billes ou à aiguilles entre l'évidement circulaire 26 du flasque fixe 1 et la périphérie extérieure du flasque mobile 12.

Le flasque mobile 12 comporte également, d'une manière connue en soi, des organes de liaison, non représentés, avec la partie inférieure de l'armature du dossier du siège.

La commande de rotation de l'arbre 14, assurant la rotation angulaire de la came 7, peut se faire soit manuellement par le bout d'arbre 114 soit mécaniquement, électriquement, pneumatiquement par la partie centrale 214 de l'arbre 14.

Finalement, il y a lieu de signaler que la cavité 112 du flasque mobile 12 porte sur sa face 112a une denture destinée à coopérer avec la partie dentée 3a des grains 3 qui sont logés dans les alvéoles 50.

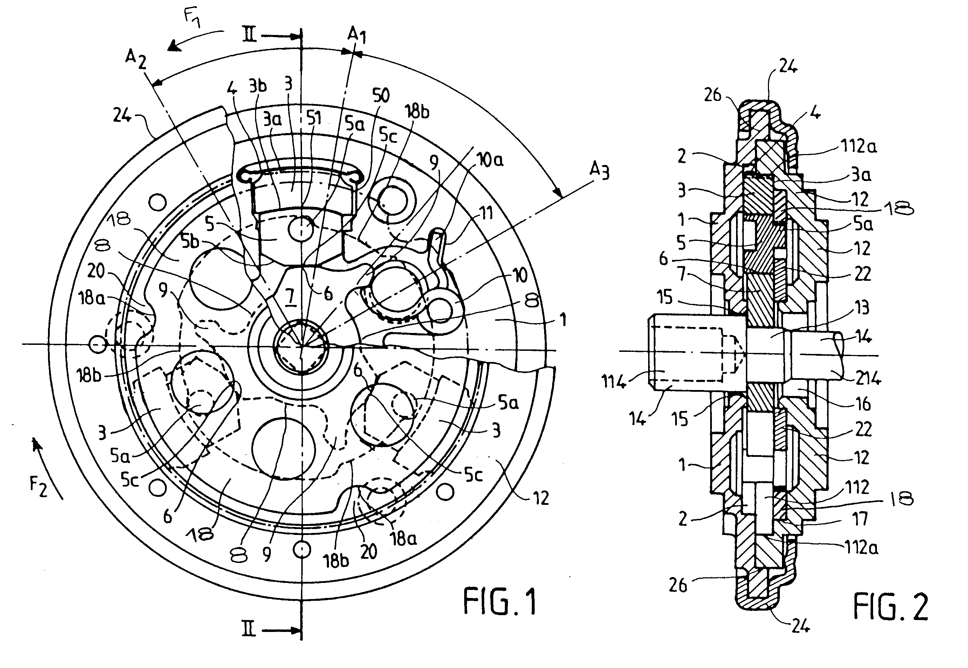

A la fig. 1, le mécanisme d'articulation est en position bloquée puisque la face supérieure 3a des grains 3 est en contact avec la denture 112a du flasque mobile 12.

Les doigts 5a sont disposés contre les surépaisseurs 18b de l'anneau 18 et les pousse-grains 5 reposent par leur face inférieure 5a sur les redans 6 de la came 7.

Lorsque l'on désire passer, par exemple, de la position normale du dossier, représentée à la fig. 1, axe A1, à une position rabattue du dossier sur l'assise, direction flèche F1, axe A2, on déverrouille les pousse-grains 5 en faisant tourner la came 7 dans le sens de la flèche F2 (fig. 1).

Ce mouvement a pour effet de tendre le ressort de rappel 10 puisque les queues 9, suivant le sens de la flèche F2, compriment ces ressorts.

Les pousse-grains 5, qui reposent alors sur un secteur en creux 8 de la came 7, peuvent donc reculer vers l'arbre 14 et sont maintenus dans cette position par les surépaisseurs 18b de l'anneaux 18.

Les grains 3 sont repoussés par les ressorts à lame 4 et, de ce fait, la denture 112a du flasque mobile 12 est libérée.

Le dossier peut donc être amené en avant aisément suivant un angle égal à 30°, axe A2, correspondant à la longueur des surépaisseurs 18b.

Il n'est pas nécessaire, pendant ce temps, d'agir sur la commande placée sur l'arbre 14 puisque les doigts 5a des pousse-grains 5 sont maintenus abaissés par les surépaisseurs 18b.

Ce mouvement est suivi par le retour du dossier du siège en position normale lorsque les passagers, entrant ou sortant des places arrière, ne sont plus dans le véhicule. Le dossier retourne alors dans la position donnée par l'axe A1 c'est-à-dire que la came 7 reprend sa position de blocage représentée à la fig. 1, les pousse-grains 5 et les grains 3 reprennent également leur position de la fig. 1 et les dents des grains 3 peuvent être de nouveau dans la denture 112a du flasque mobile 12, les ressorts 10, en se décomprimant, vont aider le mouvement de retour du dossier.

Si on désire obtenir un autre réglage de l'inclinaison du dossier du siège, par exemple vers l'axe A3, on déverrouille temporairement les pousse-grains 4 en faisant pivoter la came 7, dans le sens de la flèche F2 (fig. 1), les doigts 5a peuvent alors s'abaisser en libérant les grains 3, on règle la position choisie du dossier du siège, en direction de l'axe A3. Le dossier arrivant en position choisie, on libère le mouvement de la came 7 qui reprend sa position normale, les grains 3 peuvent alors se verrouiller dans la denture 112a du flasque mobile 12.

## Revendications

1. Mécanisme de réglage du dossier d'un siège, comprenant un flasque circulaire fixe (1) fixé sur l'armature de l'assise du dossier, ce flasque fixe étant évidé intérieurement sous la forme d'une coupelle (2) et contenant des alvéoles (50), d'une part, et, d'autre part, un évidement circulaire de grand diamètre (26) pour recevoir le bord périphérique d'un flasque mobile circulaire (12) présentant également extérieurement des organes de fixation pour le relier à l'armature du dossier du siège considéré, puis des alvéoles (50) du flasque fixe (1) contiennent intérieurement des grains (3) disposés à 120° les uns des autres, comportant chacun une denture extérieure (3a), ces grains reposant sur des pousse-grains (5) munis chacun d'un doigt (5a) tourné vers le flasque mobile (12), ces pousse-grains (5) reposant sur une came (7) montée sur un arbre central (14) entraînant en rotation la came (7) qui présente dans le prolongement de ses trois redans (6) d'une part, des sections en creux (8) et, d'autre part, des queues (9) coopérant avec des ressorts (10) en cor de chasse dont une des extrémités est maintenue dans une cavité (11) prévue à l'intérieur du flasque fixe, caractérisé en ce que les doigts (5a) des pousse-grains (5) coopèrent avec un anneau de déverrouillage (18) maintenu solidaire, et à l'intérieur, du flasque mobile (12) et présentant trois surépaisseurs (18b) assurant le maintien en position repoussée vers le centre du mécanisme de réglage du dossier d'un siège lorsque la came (7) a été pivotée dans le sens de son effacement contre l'action des ressorts (10).

2. Mécanisme de réglage suivant la revendication 1, caractérisé en ce que l'anneau de déverrouillage (18) présente des découpes (18a) coopérant avec des bossages (20) prévus à l'intérieur du flasque mobile (12) pour le maintien en position de l'anneau de déverrouillage (18).

3. Mécanisme de réglage suivant l'une des revendications 1 et 2, caractérisé en ce que la partie de chaque grain (3), placée à l'intérieur du flasque fixe (1), est normalement repoussée vers le centre du mécanisme par un ressort à lame (4).

4. Mécanisme de réglage suivant l'une des revendications 1 à 3, caractérisé en ce que le maintien en place de la came (7) et des pousse-grains (5) à l'intérieur du mécanisme de réglage entre le flasque fixe (1) et le flasque mobile (12) est réalisé par interposition d'une rondelle centrée (22).

5. Mécanisme de réglage suivant l'une des revendications 1 à 4, caractérisé en ce que la denture (3a) des grains (3) coopère avec une denture (112a) taillée dans la face intérieure d'une cavité (112) du flasque mobile (12).

## Claims

1. Adjusting mechanism of the back portion of a seat, comprising a fixed circular flange (1) attached to the armature of the sitting portion of the seat, this fixed flange being recessed inside in the shape of a cup (2) and containing set of cutouts (50), on a one hand, and, on an other hand, a large diameter circular recess (26) for receiving the peripheral edge of a circular mobile flange (12) having also outside fixation members for connecting it to the armature of the back portion of the relative seat, then cutouts (50) of the fixed flange (1) contain inside blocks (3) placed at 120° from one another, each including an outer toothing (3a), these blocks bearing on block-pushing members (5) each provided with a finger (5a) turned toward the mobile flange (12), these block-pushing members (5) being supported by a cam (7) mounted on a central shaft (14) driving in rotation the cam (7) which is provided, in the extension of its three steps (6), on a one hand, with hollow sections (8) and, on an other hand, with shanks (9) cooperating with hunting horn shaped springs (10) one end of which is held in a cutout portion (11) provided inside the fixed flange, characterized in that the fingers (5a) of the block-pushing members cooperate with an unlatching ring (18) integrally hold inside the mobile flange (12) and having three projections (18) provided for the holding in a position pushed back toward the centre of the adjusting mechanism of the back portion of a seat when the cam (7) has pivoted in a retracted direction against the action of the springs (10).

2. Adjusting mechanism according to claim 1, characterized in that the unlatching ring (18) is formed with cut-out portions (18a) cooperating with bosses (20) provided inside the mobile flange (12) for the holding in position of the unlatching ring (18).

3. Adjusting mechanism according to one of claims 1 and 2, characterized in that the portion of each block (3), placed inside the fixed flange (1), is normally pushed back toward the centre of the mechanism by a leaf spring (4).

4. Adjusting mechanism according to one of claims 1 to 3, characterized in that the holding in position of the cam (7) and of the block-pushing members (5) inside the adjusting mechanism between the fixed flange (1) and the mobile flange (12) is provided by interposition of a centered washer (22).

5. Adjusting mechanism according to one of claims 1 to 4, characterized in that the toothing (3a) of the blocks (3) cooperates with a toothing (112a) cut in the inner face of a recess (112) of the mobile flange (12).

## Patentansprüche

1. Vorrichtung zum Verstellen einer Sitzrückenlehne, die eine feststehende runde Lagerplatte (1) umfaßt, die fest am Beschlag der Rückenlehne angebracht ist, wobei diese feste Lagerplatte innen tiegelförmig ausgespart ist (2) und zum einen Ausnehmungen (50) und weiter einen kreisförmigen Ausschnitt (26) von großem Durchmesser umfaßt, in dem der Außenrand einer beweglichen runden Lagerplatte (12) aufgenommen ist, der außen Befestigungselemente zur Verbindung mit dem Beschlag der Rückenlehne des betreffenden Sitzes aufweist, weiter Ausnehmungen (50) der festen Lagerplatte (1), in denen um 120° gegeneinander versetzte Sperrstücke (3) aufgenommen sind, die jeweils eine Außenverzahnung (3a) aufweisen, wobei diese Sperrstücke auf Druckstücken (5) aufsitzen, von denen jedes einen Zapfen (5a) aufweist, der zur beweglichen Lagerplatte (12) gerichtet ist, diese Druckstücke (5) auf einer Nockenscheibe (7) aufsitzen, die auf einer zentralen Achse (14) angebracht ist, die die Nockenscheibe (7) in Drehung versetzt, die wiederum in Verlängerung ihrer drei Höcker (6) einerseits tiefere Abschnitte (8) und andererseits Nasen (9) aufweist, die mit Ringfedern (10) in Berührung stehen, die mit einem Ende in einer Ausnehmung (11) am Innenrand der festen Lagerplatte gehaltert sind, dadurch gekennzeichnet, daß die Zapfen (5a) der Druckstücke (5) in einen Entriegelungsring (18) eingreifen, der in der beweglichen Lagerplatte (12) gehaltert und mit dieser verbunden ist und drei Erhöhungen (18b) aufweist, die die Festhaltung in einer Position näher zur Mitte der Verstellvorrichtung der Sitzrückenlehne sicherstellen, wenn die Nockenscheibe (7) im Drehsinn ihrer Wirkungsweise gegen die Federn (10) verdreht wird.

2. Vorrichtung zum Verstellen nach Anspruch 1, dadurch gekennzeichnet, daß der Entriegelungsring (18) Ausschnitte (18a) aufweist, die mit innen auf der beweglichen Lagerplatte (12) vorgesehenen Zapfen (20) zur Sicherung des Entriegelungsringes (18) zusammenpassen.

3. Vorrichtung zum Verstellen nach einem der Ansprüche 1 und 2, dadurch gekennzeichnet, daß jedes der in der festen Lagerplatte (1) angeordneten Sperrstücke (3) normalerweise durch eine Blattfeder (4) zur Mitte der Vorrichtung gedrückt wird.

4. Vorrichtung zum Verstellen nach einem der Ansprüche 1 bis 3, dadurch gekennzeichnet, daß die Halterung der Nockenscheibe (7) und der Druckstücke (5) in der Vorrichtung zum Verstellen zwischen der festen Lagerplatte (1) und der beweglichen Lagerplatte (12) durch die Einfügung einer zentrierten Scheibe (22) realisiert ist.

5. Vorrichtung zum Verstellen nach einem der Ansprüche 1 bis 4, dadurch gekennzeichnet, daß die Verzahnung (3a) der Sperrstücke (3) mit einer Verzahnung (112a) in Eingriff gelangt, die in die Innenseite einer Aussparung (112) der beweglichen Lagerplatte (12) eingearbeitet ist.
